# EUROPEAN PATENT SPECIFICATION

(11) **EP 4 402 022 B1**
(45) Date of publication and mention of the grant of the patent: **06.05.2026**
(21) Application number: 22772641.1
(22) Date of filing: 18.08.2022
(51) Int. Cl.: B60R 16/037

(54) **SYSTEM AND METHOD FOR APPLYING VEHICLE SETTINGS**
SYSTEM UND VERFAHREN ZUR ANWENDUNG VON FAHRZEUGEINSTELLUNGEN
SYSTÈME ET PROCÉDÉ D'APPLICATION DE RÉGLAGES DE VÉHICULE

(30) Priority: 14.09.2021 US 202117474900
(43) Date of publication of application: 24.07.2024
(73) Proprietor: BlackBerry Limited, Waterloo, Ontario N2K 0A7 (CA)
(72) Inventor: LUDWIG, Sue Hsiu Ying, Waterloo, Ontario N2K 0A7 (CA); LANDRY, Nicholas Ivan, Waterloo, Ontario N2K 0A7 (CA); SHOME, Tarun William, Waterloo, Ontario N2K 0A7 (CA); SHUKLA, Abhishek, Waterloo, Ontario N2K 0A7 (CA)
(74) Representative: MERH-IP Matias Erny Reichl Hoffmann Patentanwälte PartG mbB
(86) International application number: PCT/US2022/040786
(87) International publication number: WO 2023/043569

(56) References cited:
- EP-A1- 2 743 141
- US-A1- 2015 148 989
- US-A1- 2018 148 007
- US-A1- 2021 094 492

## Description

### FIELD

The present disclosure relates generally to applying vehicle settings, and more particularly to applying vehicle settings based on vehicle occupancy, and even more particularly to applying vehicle settings based on occupant identity and conditional modifiers.

### BACKGROUND

Vehicles offer a variety of settings and features which improve safety, comfort, and enjoyment for vehicle occupants. Vehicle settings and features include controls for adjusting seat tilt, angle, position, firmness, and temperature; adjusting cabin temperature, air flow, and air flow direction; enabling/disabling air-bag deployment based on vehicle occupancy; configuring preset audio stations and other audio and music settings; adjusting User Interface (UI) settings and visual display settings; WiFi settings; adjusting side-view and rear-view mirror angles and tilts; controlling windows; steering wheel tilt and temperature; and so forth. It remains desirable however to develop further improvements and advancements in relation to personalizing vehicle settings for occupants, to overcome shortcomings of known techniques, and to provide additional advantages.

This section is intended to introduce various aspects of the art, which may be associated with the present disclosure. This discussion is believed to assist in providing a framework to facilitate a better understanding of particular aspects of the present disclosure. Accordingly, it should be understood that this section should be read in this light, and not necessarily as admissions of prior art.

US 2018/148007 A1 discloses a system for adjusting one or more vehicle settings including one or more processors, one or more occupant recognition sensors communicatively coupled to the one or more processors and configured to output an occupant recognition signal indicative of an identity of one or more vehicle occupants, and one or more memory modules communicatively coupled to the one or more processors. The one or more memory modules store logic that when executed by the one or more processors, cause the one or more processors to: recognize a first vehicle occupant of the one or more vehicle occupants, determine a first vehicle zone in which the first vehicle occupant is present, automatically adjust the one or more vehicle settings based on one or more occupant preference settings associated with the first vehicle occupant and the first vehicle zone.

US 2015/148989 A1 discloses a mobile computing device operated to control a vehicle. A digital key for accessing a vehicle is stored for accessing the vehicle. Profile information is associated with the digital key for configuring operation and/or use of a vehicle. The profile information includes one or more outside parameters for implementing one or more pre-entry vehicle configurations. When one or more proximity conditions are detected as being satisfied as between the mobile computing device and the vehicle, a communication is sent to the vehicle in order to cause the vehicle to implement one or more pre-entry vehicle configurations. The communication can be based on the digital key and may specify the one or more outside parameters.

### BRIEF DESCRIPTION OF THE DRAWINGS

Embodiments of the present disclosure will now be described, by way of example only, with reference to the attached Figures.
FIG.1 is a flow chart of an embodiment of a method in accordance with the present disclosure for identifying an occupant and their associated user profile or account, including creating, setting, and applying their associated vehicle settings based on conditional modifiers.
FIG. 2 is a flow chart of an embodiment of a method in accordance with the present disclosure for sending requests to an external party using a Vehicle Identification Number (VIN), user identification (userID), or combination of both.
FIG. 3A is a top view of an open interior of a vehicle equipped with a single camera embodiment of a system and method for identifying occupants and applying their associated sets of vehicle settings in accordance with the present disclosure.
FIG. 3B is a top view of an open interior of the vehicle illustrated in FIG. 3A further equipped with a multi-camera embodiment of a system and method for identifying occupants and applying their associated sets of vehicle settings in accordance with the present disclosure.
FIG. 4 is a top view of an open interior of a vehicle equipped with a non-camera embodiment of a system and method for identifying occupants based on an associated device and applying their associated sets of vehicle settings in accordance with the present disclosure.
FIG. 5 is a top view of an open interior of a vehicle equipped with a hybrid embodiment of a system and method for identifying occupants based on facial recognition and/or an associated device and applying their associated sets of vehicle settings in accordance with the present disclosure.
FIG. 6 is a top view of an open interior of a vehicle having a plurality of air vents, the settings for which may be personalized, controlled, and applied in accordance with an embodiment of a system and method of the present disclosure.
FIG. 7 is a top view of an open interior of a vehicle having a plurality of air vents and a plurality of zones, each zone being associated with on or more controls or features which may be personalized, controlled, and applied in accordance with an embodiment of a system and method of the present disclosure.
FIG. 8 is a diagram of an interactive User Interface (UI) display for a user profile or account having associated vehicle information and vehicle settings information for an occupant in accordance with the present disclosure.
FIG. 9 is a block diagram of an example computing device or system for implementing a system and/or method for applying vehicle settings in accordance with the present disclosure.

Throughout the drawings, sometimes only one or fewer than all of the instances of an element visible in the view are designated by a lead line and reference character, for the sake only of simplicity and to avoid clutter. It will be understood, however, that in such cases, in accordance with the corresponding description, that all other instances are likewise designated and encompasses by the corresponding description.

### DETAILED DESCRIPTION

The present invention provides a computer-implemented method, system, and a non-transitory computer-readable medium for applying vehicle settings having the features of respective independent claims. Embodiments are described in the dependent claims.

According to an example that is not encompassed by the claims but useful for understanding the invention,, the present disclosure provides a computer-implemented method for applying vehicle settings, comprising identifying a vehicle occupant having a personalized set of vehicle settings for a vehicle; identifying a condition modifier associated with the vehicle occupant and the personalized set of vehicle settings, and applying a vehicle setting from the set of vehicle settings based on the condition modifier.

According to an example embodiment, the condition modifier is associated with a seated location of the vehicle occupant.

According to an example embodiment, the condition modifier comprises a first condition modifier and a second condition modifier, the first condition modifier being associated with a seated location of the vehicle occupant, and the second condition modifier being associated with a vehicle condition.

According to an example embodiment, the vehicle condition is a cabin temperature of the vehicle.

According to an example embodiment, applying the vehicle setting comprises applying the vehicle setting to a first zone within the vehicle, the first zone being associated with the seated location of the vehicle occupant.

According to an example embodiment, applying the vehicle setting comprises applying the vehicle setting to a plurality of zones with the vehicle, wherein at least one zone of the plurality of zones does not include the seated location of the vehicle occupant.

According to an example embodiment, identifying the vehicle occupant comprises capturing a facial image of the vehicle occupant; retrieving a verified facial image of the vehicle occupant, and comparing, using a facial recognition algorithm, the captured facial image of the vehicle occupant with the verified facial image of the vehicle occupant.

According to an example embodiment, identifying the vehicle comprises identifying an electronic device associated with the vehicle.

According to an example embodiment, identifying the vehicle comprises prompting the vehicle occupant to provide an authentication credential; retrieving a verified authentication credential of the vehicle occupant, and comparing the provided authentication credential with the verified authentication credential.

According to an example embodiment, the condition modifier further comprises a third condition modifier, the third condition modifier being associated with a seated location of another vehicle occupant.

According to an example embodiment, applying the vehicle setting comprises identifying a first zone within the vehicle associated with a seated location of the vehicle occupant; identifying a second zone within the vehicle associated with a seated location of the another vehicle occupant; applying the vehicle setting to the first zone, and preventing the vehicle setting from applying to the second zone.

According to an example embodiment, applying the vehicle setting further comprises requesting confirmation from the vehicle applicant to apply the vehicle setting, and selectively applying the vehicle setting based on the confirmation provided by the vehicle occupant.

According to an example that is not encompassed by the claims but useful for understanding the invention,, the present disclosure provides a non-transitory computer-readable medium having instructions stored thereon that, when executed by a computing device, cause the computing device to perform a method for applying a vehicle setting for a vehicle, comprising identifying an identity of a vehicle occupant; retrieving a personalized set of vehicle settings associated with the vehicle occupant; identifying, a condition modifier associated with the vehicle occupant and the personalized set of vehicle settings, and applying a vehicle setting from the personalized set of vehicle settings based on the condition modifier.

According to an example embodiment, the condition modifier comprises a first condition modifier and a second condition modifier, the first condition modifier being associated with a seated location of the vehicle occupant, and the second condition modifier being associated with a vehicle condition.

According to an example embodiment, applying the vehicle setting comprises applying the vehicle setting to a first zone within the vehicle, the first zone being associated with the seated location of the vehicle occupant.

According to an example embodiment, identifying the vehicle occupant comprises capturing a facial image of the vehicle occupant; retrieving a verified facial image of the vehicle occupant, and comparing, using a facial recognition algorithm, the captured facial image of the vehicle occupant with the verified facial image of the vehicle occupant.

According to an example embodiment, the condition modifier further comprises a third condition modifier, the third condition modifier being associated with a seated location of another vehicle occupant.

According to an example embodiment, applying the vehicle setting further comprises requesting confirmation from the vehicle applicant to apply the vehicle setting, and selectively applying the vehicle setting based on the confirmation provided by the vehicle occupant.

The system and methods for applying vehicle settings disclosed herein generally include identifying an occupant or object within a vehicle and applying their associated vehicle settings to one or more zones within the vehicle wherein the vehicle settings are further based on a condition(al) modifier associated with the occupant or object. A conditional modifier functions to modify which vehicle settings are applied based on triggering one or more conditions. Examples of a conditional modifiers include but are not limited to, the location of the occupant or object within the vehicle, the combination of occupants and objects within the vehicle, an environment condition such as the time of day, time of year, type of weather, or temperature inside/outside the vehicle, type of commute which may influence occupant attire and thus may influence car settings such as cabin temperature, for example potentially having lower temperature settings for suit attire when commuting to work or when wearing workout attire while commuting home after a workout or hiking trip, and/or other factors that may influence the comfort, safety, enjoyment, or desired environment for an occupant or object within the vehicle. In an example aspect, an occupant or object may have an associated set of vehicle settings triggered based on a plurality of conditions such as where they are sitting in the vehicle (e.g. driver, front seat passenger, middle or back row, middle seat, window seat, multiple seats) in combination with an environmental condition (e.g. temperature outside the vehicle, time of day) or other factor(s) such as the number and/or identity of other occupants within the vehicle.

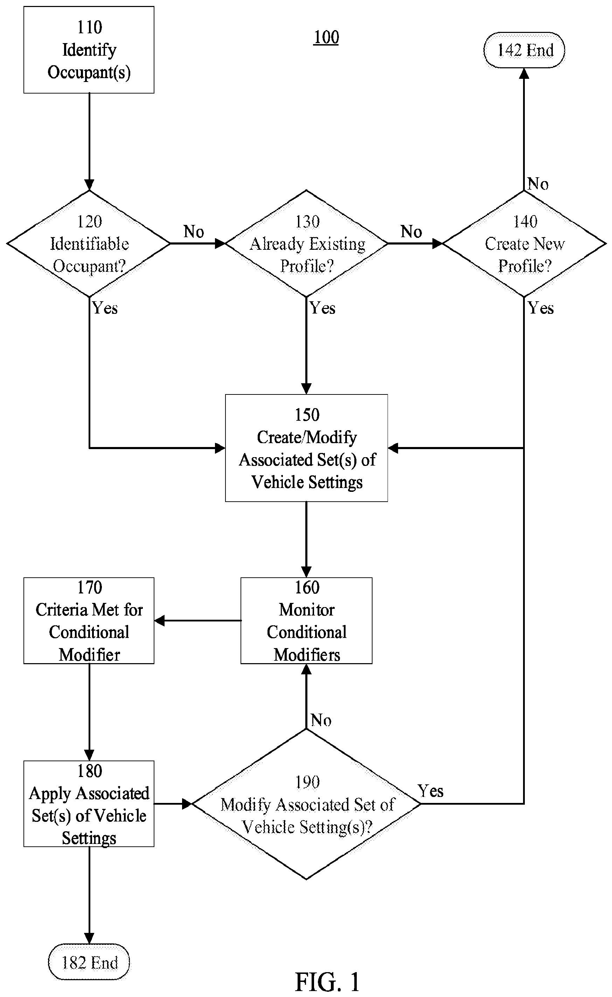

FIG.1 is a flow chart of an embodiment of a method 100 for setting, creating, modifying, and applying vehicle settings in accordance with the present disclosure. The method 100 includes an initial step 110 of identifying one or more occupants present in a vehicle. Embodiments for identifying vehicle occupants include but are not limited to facial recognition, manual sign-in or self identification, and/or detecting a device associated with an occupant, such as a key fob, smartphone, smartwatch, tablet, laptop, or other electronic device. For example, the vehicle may be equipped with a camera and a facial recognition algorithm for identifying occupants and objects inside the vehicle; the vehicle may be equipped with WiFi, Bluetooth^{™}, Near Field Communication (NFC), Radio Frequency Identification (RFID), and/or other wireless communication standards for use in passively or actively detecting a device associated with an occupant or object, such as a key fob, smartphone, smartwatch, tablet, laptop, or other electronic device; similarly, an occupant may self-identify themselves such as by using a voice command or manual sign-in through an in-vehicle system; or, may sign-in remotely using a software application running on a laptop, tablet, smartphone, or other electronic device in communication with the vehicle.

The method 100 may make an assessment 120 as to whether the occupants are identifiable or not. Occupants identified as having an associated user profile or account may then be provided access to their associated vehicle settings via an interactive in-vehicle display or via a remote display, such as on a display of an electronic device, such as a laptop, tablet, smartphone, smartwatch and/or other electronic device running a software application in communication with the vehicle. The method 100 includes a further step 150 for user/occupants having accessed their accounts (or created a new account via step 140) to create or modify associated set(s) of vehicle settings. In an embodiment, after an occupant is identified as having an associated user profile or account, the occupant may be further prompted to confirm or prove their identity using a password or other authentication method in order to sign-in or access their account.

When unable to identify an occupant, the method 100 may include a further step 130, prompting the occupant to self identify as to whether they already have an existing user profile or account. Where the unidentified occupant identifies an associated user profile or account, the occupant may be further prompted to provide a password or complete an authentication process to gain access to the user profile or account. Having gained accessed to the user profile or account, the occupant may then proceed to a step 150 allowing for modifying or creating associated sets of vehicle settings.

In the event that the occupant is unidentifiable, does not have an associated user profile or account, or otherwise wishes to create a new user profile or account, the method 100 may take a further step 140 of prompting the occupant as to whether they wish to create a new user profile or account. If the occupant wishes to create a new profile or account, the method 100 may retain data obtained for the purpose of identifying the occupant, for example images taken for the purpose of facial recognition, or metadata of an electronic device associated with the occupant. Such data may be stored to memory local to the vehicle, on a remote database or server, in the cloud, on portable storage such as a USB key or drive, and/or on a device associated with the user/occupant, such as on a laptop, tablet, or smartphone.

When creating a new profile, the method 100 may prompt the occupant to provide a desired username and password for use in accessing the new user profile or account. Such prompts may be provided via an in-vehicle system, such as a dashboard console or display, or remotely to an electronic device, such as a smartphone, smartwatch, tablet, laptop, or other electronic device in communication with the vehicle. In an embodiment, the systems and methods disclosed herein includes generating and issuing an identifying tag or unique ID - such as a userID - associated with a user profile or account, either at the time of profile or account creation, or selectively thereafter upon request from the user/occupant, allowing users an additional measure of privacy. In an embodiment, the user/occupant may be prompted to accept the auto-generated identifying tag or unique ID, or request a new identifying tag or unique ID. Accordingly, a user/occupant can create a user profile or account without entering any personal information but can rather rely on the identifying tag or unique ID to access their profile or account, functioning to obfuscate any personal information of the user/occupant and/or otherwise provide a measure of privacy from personal information being associated with personalized vehicle settings. Subsequently, the associated user/occupant may login to their associated user profile or account using the identifying tag or unique ID, and optionally, using a further authentication method such as a password. In an embodiment, the identifying tag or unique ID is associated with a Vehicle Identification Number (VIN). In an embodiment, the identifying tag or unique ID is based on the VIN. In an embodiment, a user/occupant may selectively opt to share only some of their personal information wherein a vehicle associated with the user settings is identified only by the license plate number associated with the vehicle. In an embodiment, a user/occupant may selectively opt to share only some of their personal information wherein a vehicle associated with the user settings is identified only by the VIN associated with the vehicle. In an embodiment, a user/occupant may selectively opt to share none of their personal information wherein a vehicle associated with the user settings is identified only by the uniquely generated identifying tag or unique ID.

Once the user profile or account is created, the occupant may access step 150 to create and/or modify associated sets of vehicle settings. If the occupant does not wish to create a user profile or account, the method 100 terminates activity with the occupant in a final step 142. In an embodiment, when a new occupant does not wish to create a new user profile or account, the systems and methods disclosed herein delete or remove any information stored in relation to the new occupant, for example, deleting any images that may have been taken for the purposes of identifying the new occupant with facial recognition or otherwise obfuscating any identifying visuals of the occupant in any retained images, and/or deleting any metadata acquired from an electronic device associated with the new occupant.

Step 150 allows an occupant to create and modify sets of vehicle settings for their user account or profile. Vehicle settings include but are not limited to seat settings (tilt, firmness, displacement along floor, height above floor, headrest position, heat, etc.), HVAC settings (e.g. temperature, air conditioning on/off, intensity of air flow, direction of air flow, vents open/close, etc.), audio settings (e.g. preset AM/FM/Satellite radio settings, preset apps for music, preset music or playlists, volume, bass, etc.), mirror settings (e.g. angle, tile, and displacement of side view mirrors and rear view mirrors), steering wheel settings (e.g. heat, angle of steering wheel, displacement of steering wheel, etc.), User Interface (UI) settings (e.g. colors and symbols used to display information on dashboard or other in-vehicle display, types of information displayed, location of where information is displayed, etc.), connectivity settings (e.g. WiFi, Bluetooth^{™} etc.) and any other vehicle setting that a user may modify to change the environment within the car.

Each set of vehicle settings is associated with one or more conditional modifiers that enable the system and methods disclosed herein to identify which set of associated vehicle settings to apply for a given occupant. Accordingly, user/occupants provide conditions associated with their personalized sets of vehicle settings, enabling the system and methods disclosed herein to automatically identify which settings a user/occupant would like to use. For example, a user/occupant may create different sets of HVAC settings which conditionally apply based on one or more conditions such as the temperature outside in combination with where the user/occupant is sitting in the vehicle, or simply based only on the temperature outside. Thus, the user/occupant can create a first set of HVAC settings conditional on being the driver and only occupant in the vehicle in combination with the temperature outside being 25 degrees Celsius or higher; a second set of HVAC settings conditional on being the driver and only occupant in the vehicle and the temperature outside being negative 5 degrees Celsius or lower; a third set of HVAC settings conditional on being the driver and there being one or more other occupants in the vehicle; and so forth.

Conditional modifiers include but are not limited to conditions internal to the vehicle such as where an occupant is sitting in the vehicle (e.g. driver, front seat passenger, middle or back row, middle seat, window seat, multiple seats), the number and/or identity of other occupants within the vehicle, and/or conditions external to the vehicle such as environmental conditions (e.g. temperature outside the vehicle, time of day, time of year), or other condition(s)/factors(s) that may influence how a vehicle occupant may want to adjust their environment within the vehicle.

Some vehicle settings, such as seat settings, are necessarily localized to a particular location in the vehicle. Other settings, such as HVAC settings, can be both localized to a particular area or zone in the vehicle, or may be more universally applied across the whole vehicle. For example, an HVAC setting for air conditioning and maximum air flow can be applied to all air vents in a vehicle, or simply to vents for an area or zone in the vehicle associated with the occupant, such as a zone or area associated with the driver's seat. Accordingly, user/occupants can additionally create or modify sets of vehicle settings to apply only locally, to where they are sitting, or to other areas or zones within the vehicle.

The method 100 further includes a step 160 for monitoring the conditional modifiers associated with any of the set of vehicle settings linked to the activated user profiles and accounts of any participating occupants. A vehicle can monitor such conditional modifiers using sensors such as cameras, proximity sensors, or other position locating sensors and equipment to determine which seat, area, or zone of the vehicle an occupant is located in; can use temperature sensors to monitor temperatures external and internal to the vehicle; can interpret clocks, calendars, or other timing information to determine a time of day or season; and so forth. In an embodiment, the systems and methods disclosed herein continuously monitor conditional modifiers in real time. In an embodiment, the systems and methods disclosed herein monitor the conditional modifiers at preset time intervals, such as monitoring conditions once every thirty seconds.

The method 100 may further include a step 170 to determine whether a change in a conditional modifier is sufficient to trigger a different set of associated vehicle settings. For example, upon entry into the vehicle, an occupant may take a seat in the back row, passenger side of the vehicle, triggering a first set of associated vehicle settings based on the condition of where the occupant sits. However, during transit, the occupant may shift their position in the back row from the passenger's side to the driver's side; the systems and methods disclosed herein can monitor and detect the seat change, and further assess whether the particular change in seat conditions triggers a different set of associated vehicle settings for the occupant. If the conditional modifier triggers a change to a different set of associated vehicle settings, the method 100 includes a further step 180 of applying the associated set of vehicle settings. After the settings are applied (or not applied), the method 100 continues to monitor the conditional modifiers via step 160. In an embodiment, the associated set of vehicle settings are applied automatically, without prompting the occupant. In an embodiment, the systems and methods disclosed herein prompt the occupant to confirm whether they want to apply changes in vehicle settings, such as by prompting the occupant with an audio or visual cue. In an embodiment, the audio or visual cue is provided via an in-vehicle audio or display system, such as a dashboard console or display. In an embodiment, the audio or visual cue is provided remotely via an app running on a laptop, tablet, smartphone, smartwatch and/or other electronic device associated with the occupant.

The method 100 includes a step 190 for selectively navigating an occupant back to step 150, for modifying or creating sets of vehicle settings for the associated user profile or account of a user. Though the method 100 depicts engaging step 190 after having applied any vehicle settings in step 180, this is simply for illustrative purposes only, as those skilled in the art will appreciate that a user/occupant may, at virtually any time, access their user profile or account to change settings. In an embodiment, a user/occupant can access their settings remotely, outside the vehicle, via a laptop, tablet, smartphone, smartwatch and/or other electronic device running a software app communicatively coupled to the vehicle. In an embodiment, the systems and methods disclosed herein includes a safety feature which limits the driver's access to changing settings while the car is in motion, in an effort to prevent distracted driving.

The method 100 may also include a step 182 which ends or overrides the methods and systems disclosed herein in favor of manually changing and controlling the vehicle settings. Such a manual override can be accessed or engaged at any time.

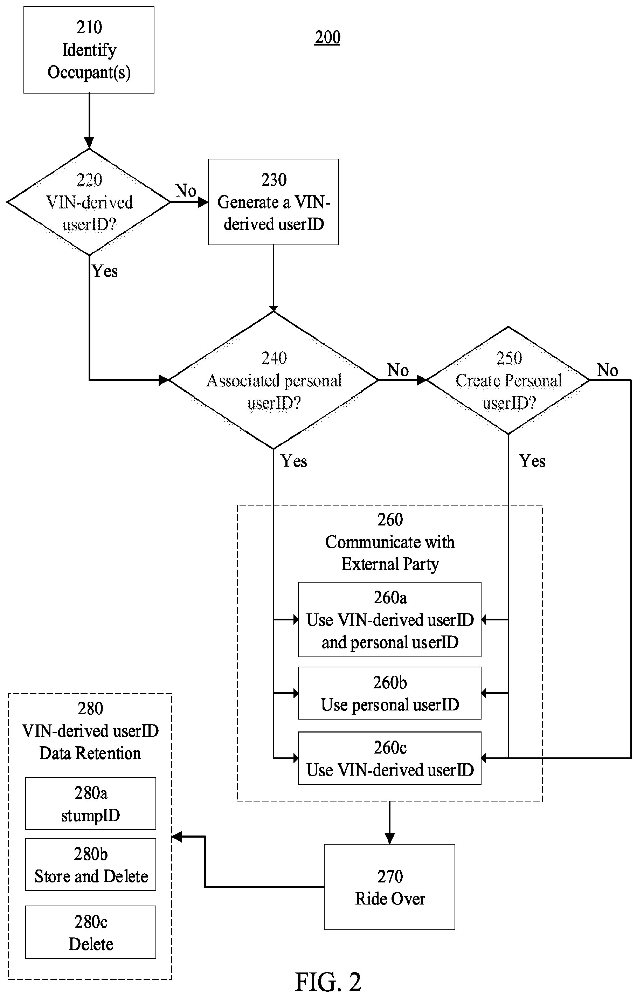

FIG. 2 is a flow chart of an embodiment in accordance with the present disclosure of a method 200 for a vehicle occupant to communicate with an external party or third party wherein the vehicle occupant may obfuscate or limit the amount of personal information shared with the external party or third party. The method 200 includes an initial step 210 of identifying one or more occupants present in a vehicle, and a subsequent step 220 for determining whether the occupant(s) has(have) a VIN-derived userID. For example, in response to a driver starting the ignition, the system and methods disclosed herein may proceed to identify one or more occupants, such as by using facial recognition, and then subsequently determine whether the occupant(s) has(have) an associated VIN-derived userID. In the event an occupant does not have a VIN-derived userID, the method 200 proceeds to a step 230 and generates a VIN-derived userID, and then proceeds to step 240. In the event a determination is made that occupant already has a VIN-derived userID, the method 200 instead skips step 230, and proceeds directly from step 220 to step 240.

In view of the occupant having a VIN-derived userID, the method 200 includes a step 240 which further assesses whether the occupant also has a personal userID. In the event the method determines that the occupant has a personal userID, the occupant may then proceed to a step 260 for communicating with an external party via a plurality of options. In the event the method determines that the occupant does not have a personal userID, the method proceeds to a step 250 and prompts the occupant as to whether they wish to create a personal userID, after which, the occupant may proceed to a step 260 for communicating with an external party via the options associated with their decision to create a personal userID or not.

Occupants determined to already posses a personal userID via step 240, or occupants whom elect to create a personal userID via step 250, may proceed to step 260 for communicating with an external party, and may selectively communicate with an external party using any one of steps 260a, 260b, or 260c. In particular, step 260a uses the occupant's VIN-derived userID and personal userID to communicate with the external party; step 260b uses only the occupant's personal userID to communicate with the external party; and, step 260c uses only the occupant's VIN-derived userID to communicate with the external party. In this regard, occupants can select a mode of communication that obfuscates the level of personal information shared with the external party. For example, an occupant electing to communicate with an external party via step 260c need only share their VIN-derived userID, acting to obfuscate their personal information from the external party. In other words, the communication to the external party is anonymized based on the VIN-derived userID, and the communication appears to rather come from the vehicle as opposed to a particular person or occupant. Conversely, the personal userID may relate to personal information that an occupant may willingly share with the external party should the occupant choose to communicate using their personal userID via steps 260a or 260b. Occupants choosing not to generate a personal userID via step 250 are limited in communicating with external parties in step 260 using only their VIN-derived userID via step 260c, as such occupants will not have a personal userID to associate with their communications and thus cannot leverage either step 260a or 260b. In accordance with the present disclosure, occupants may communicate with external parties via any number of devices or interfaces or communication standards, including but not limited to: in-vehicle systems such as a dashboard interfaces and car seat interfaces; smartphones, smartwatches, tablets, laptops, and other electronic devices; and wireless standards including at least 802.11, 3G, 4G, 5G, LTE, NFC, Bluetooth^{™}, WiFi, and RF.

Once driving is completed via step 270, the method 200 proceeds to a step 280 having various options for retaining data and information relating to the VIN-derived userID, allowing occupants to selectively opt for one of steps 280a, 280b, and 280c. For example, via step 280a, an occupant can opt to retain their VIN-derived userID and have it associated with a stumpID that is encrypted and stored with a memory associated with the vehicle, such as a local memory, remote server or database, or cloud based memory system. In an embodiment, the stumpID is a hash of the facial profile used to identify the occupant; accordingly, should the occupant return, their VIN-derived userID can be recalled from a memory associated with the vehicle on the basis of the occupant's facial profile and associated stumpID. Via step 280b, an occupant may simply elect to retain their VIN-derived userID and optionally elect to have the VIN-derived userID deleted after a period of inactivity. Via step 280c, an occupant may simply elect to delete their VIN-derived userID. In an embodiment, an occupant may preselect an option under step 280 for retaining and/or deleting their VIN-derived userID, rather than waiting for a step 270 of the drive being over.

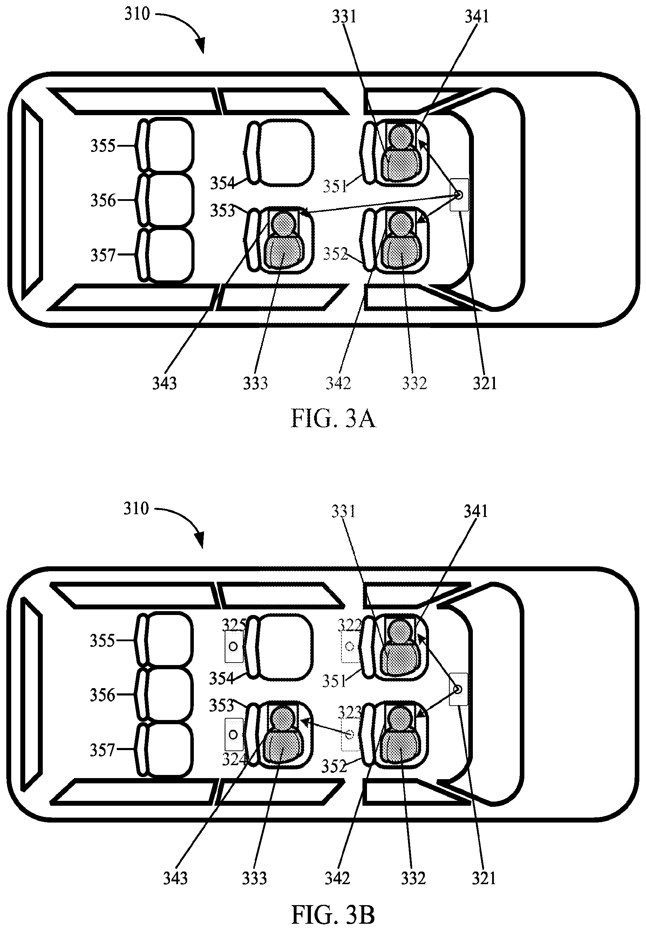

FIG. 3A is a top view of an open interior of a vehicle 310 equipped with an embodiment of a system and method for applying vehicle settings in accordance with the present disclosure. The vehicle 310 includes a first occupant 331 seated in a first seat 351, a second occupant 332 seated in a second seat 352, and a third occupant 333 seated in a third seat 353. Respective fourth, fifth, sixth, and seventh seats 354, 355, 356, and 357 are not occupied. The vehicle 310 if further equipped with a camera 321 for capturing facial images of the vehicle occupants, in particular for capturing facial images 341, 342, and 343 of the first, second, and third occupants 331, 332, and 333, respectively. The images 341, 342, and 343 are used to match the occupants with their associated user profile or account and their associated set(s) of vehicle settings. In the event the image(s) cannot be matched to a user profile or account, the occupant(s) may be further prompted to self-identify or authenticate their user profile or account by other means, or be prompted to create a new account if no pre-existing user profile or account exists. In an embodiment, a camera captures a single facial image of an occupant. In an embodiment, a camera captures a plurality of facial images of an occupant.

Generally, facial recognition algorithms rely on capturing facial images or particular characteristics of a facial image for comparison against previously taken facial images, or their corresponding identifying characteristics, associated with a confirmed identity. Thus, by capturing images, a facial recognition can attempt to compare whether live images match with a confirmed identity. In an embodiment, a facial recognition algorithm compares live images of an occupant/user to images taken at the time of creating the user profile or account. In an embodiment, live images are taken of a confirmed user/occupant to update the stored images used to confirm their identity. For example, live images may be taken of a driver while driving, including taking images of the sides of their face when shoulder checking.

FIG. 3B is a top view of an open interior of the embodiment of the vehicle 310 illustrated in FIG. 3A, further equipped with a plurality of cameras, in particular a first camera 321, second camera 322 mounted to the back of seat 351, third camera 323 mounted to the back of seat 352, fourth camera 324 mounted to the back of seat 353, and fifth camera 325 mounted to the back of seat 354. A multi-camera embodiment may advantageous provide for improved vantage points for capturing facial images of occupants that may be located at vantage points within the vehicle that may be far or otherwise obscured from view from a first camera 321 located at the front of the vehicle. In this multi-camera embodiment, the first camera 321 captures facial images 341 and 342 of the first occupant 331 and second occupant 332, respectively; and, the third camera 323 captures a facial image 343 of the third occupant 333. The facial images 341, 342, and 343 are used to match the occupants with their associated user profile or account.

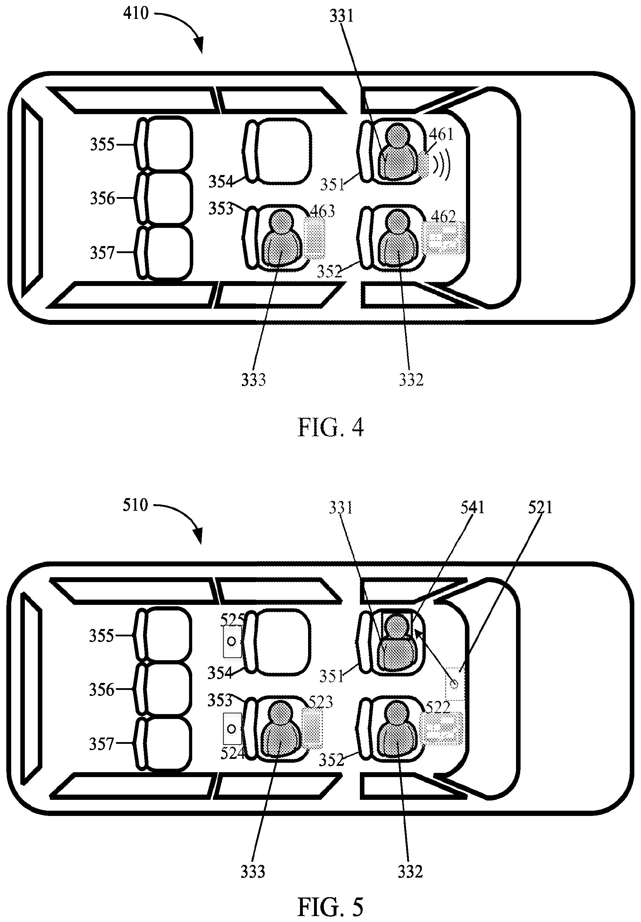

FIG. 4 is a top view of an open interior of a vehicle 410 equipped with an embodiment of a system and method for applying vehicle settings in accordance with the present disclosure. The vehicle 410 includes the same occupants 331, 332, and 333, same seats 351, 352, 353, 354, 355, 356, and 357, and same seating arrangement as the vehicle 310 depicted in FIGS. 3A and 3B. The vehicle 410 does not however include a camera 321 for capturing facial images of the occupants 331, 332, and 333, for use in matching the occupants to their associated user profile or account with a facial recognition algorithm. Rather, the vehicle 410 matches occupants by way of different devices 461, 462, and 463 associated with each occupant. For example, a key fob 461 in close proximity to the vehicle 410 and being further associated with the first occupant 331 may be used to passively emit or receive a signal to identify when the first occupant 331 is within the vicinity of the vehicle 410, for use in matching the first occupant 331 to their associated user profile or account. A tablet 462 associated with the second occupant 332 may be used passively emit or receive a signal to identify when the second occupant 332 is within the vicinity of the vehicle 410 for use in matching the second occupant 332 to their associated user profile or account. Alternatively, the second occupant 332 may run a software application on the tablet 462 to remotely login to their associated user profile or account. Similarly, a smartphone 463 in close proximity to the vehicle 410 and being further associated with the third occupant 333 may be used passively emit or receive a signal to identify when the third occupant 333 is within the vicinity of the vehicle 410 for use in matching the third occupant 333 to their associated user profile or account. Alternatively, the third occupant 333 may run a software application on the smartphone 463 to remotely login to their associated user profile or account. Once the occupants are identified with an associated user profile or account - or create a new account - they may be further prompted to submit a password or other authentication details in order to gain access to their user profile or account, in order to further create new sets of vehicle settings or modify existing sets of vehicle settings. In an embodiment, an occupant may be prompted to self identify which seat they are sitting in. Embodiments of devices which may be associated with an occupant for use in identifying the occupant and matching them to their user profile or account include but are not limited to an RFID tag, a key fob, a smartphone, a smartwatch, a laptop, a tablet, a plug-and-play device such as a USB key, or other electronic device having communications capabilities compatible with wireless communication standards such as 802.11, 3G, 4G, 5G, LTE, NFC, Bluetooth^{™}, WiFi, RF, or other communication standards or methods, such as audible signals, for use in passively or actively identifying the device associated with the occupant.

FIG. 5 is a top view of an open interior of a vehicle 510 equipped with an embodiment of a system and method for applying vehicle settings in accordance with the present disclosure. The vehicle 510 includes the same occupants 331, 332, and 333, same seats 351, 352, 353, 354, 355, 356, and 357, and same seating arrangement as the vehicle 310 depicted in FIGS. 3A and 3B, and the vehicle 410 depicted in FIG. 4. The vehicle 510 matches occupants to their associated user profile or account using facial recognition and/or detecting devices associated with the occupants. For example, a camera 521 may take a facial image of occupants seated in the first seat 351, second seat 352, third seat 353, or fourth seat 354; while a second camera 524 and third camera 525 may be used to obtain facial images of occupants seated in the fifth seat 355, sixth seat 356, and/or seventh seat 357. Alternatively, occupants may use other methods in accordance with the present disclosure to match themselves to their associated user profile or account. For example, the camera 521 may take a facial image 541 of the first occupant 331 for use in matching the first occupant 331 to an associated user profile or account. The second occupant 332 may have an associated tablet 522, for use in passively emitting or receiving a signal to indicate that the second occupant 332 is within the vicinity of the vehicle 510; or, alternatively, the second occupant 332 may use the tablet 522 to remotely login to their associated user profile or account. Similarly, the third occupant 333 may have an associated smartphone 523, for use in passively emitting or receiving a signal to indicate that the third occupant 333 is within the vicinity of the vehicle 510; or, alternatively, the third occupant 333 may use the smartphone to remotely login to their associated user profile or account.

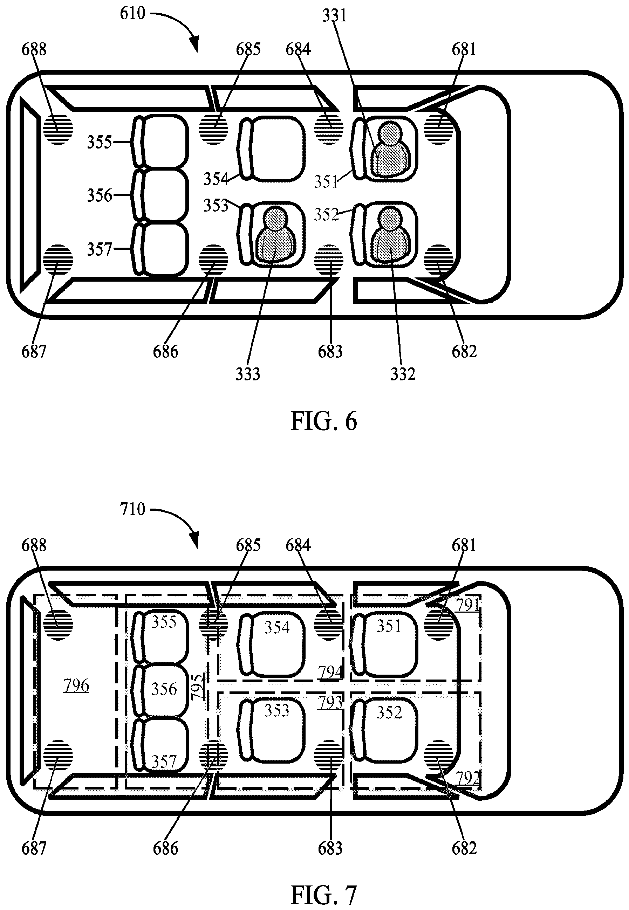

FIG. 6 is a top view of an open interior of a vehicle 610 equipped with an embodiment of a system and method for applying vehicle settings in accordance with the present disclosure. The vehicle 610 includes the same occupants 331, 332, and 333, same seats 351, 352, 353, 354, 355, 356, and 357, and same seating arrangement as the vehicle 310 depicted in FIGS. 3A and 3B, as the vehicle 410 depicted in FIG. 4, and as the vehicle 510 depicted in FIG. 5. The vehicle 610 includes a plurality of air vents 681, 682, 683, 684, 685, 686, 687, and 688 which control air flow within the vehicle and otherwise moderate temperature. Depending on vehicle settings, some vents may enable air flow, some vents may be closed or disabled and allow no air flow, some vents may provide warm air flow, and some vents may provide cool or air-conditioned air flow. Furthermore, the strength of air flow and direction of air flow may be independently set for each vent. For example, the first occupant 351 may prefer having a first vent 681 directing air flow at their mid-body at a medium level of strength. However, in accordance with the present disclosure, the first occupant is not limited to personalizing one set of settings and may rather create a plurality of settings associated with their user profile or account that are conditionally triggered. For example, the first occupant 331 may have a plurality of sets of vehicle settings associated with their user profile or account, including a first set of vehicle settings that trigger when the first occupant is sitting in seat 351 and the temperature outside the vehicle is between 18 degrees Celsius and 23 degrees Celsius, wherein the first vent 681 is set to direct air flow at a low strength, at a moderate temperature, and at the mid-body of the first occupant 331; a second set of vehicle settings that trigger when the first occupant is sitting in seat 351 and the temperature outside the vehicle is greater than 23 degrees Celsius, wherein the first vent 681 is set to direct air flow towards the face of the first occupant 331, at a low strength, and at an air conditioned temperature; and, a third set of vehicle settings that trigger when the first occupant 331 is sitting in any one of seats 353, 354, 355, 356, or 357, wherein the seventh vent 687 and the eighth vent 688 are both turned off, and the fifth vent 685 and the sixth vent 686 are both emitting air flow at a low strength setting. The second occupant 332 and third occupant 333 may similarly create sets of personalized vehicle settings having associated conditions which modify which vents they want on/off, including the associated settings for the vents.

Personalized sets of vehicle settings are not limited to vents, for example, the first occupant 331 may have preferred seat settings for firmness and the angle of the backrest, which may be applied to the given seat they are sitting in. Settings in a vehicle which can be personalized include, but are not limited to: seat settings (tilt, firmness, displacement along floor, height above floor, headrest position, heat, etc.), HVAC settings (e.g. temperature, air conditioning on/off, intensity of air flow, direction of air flow, vents open/close, etc.), audio settings (e.g. preset AM/FM/Satellite radio settings, preset apps for music, preset music or playlists, volume, bass, etc.), mirror settings (e.g. angle, tile, and displacement of side view mirrors and rear view mirrors), steering wheel settings (e.g. heat, angle of steering wheel, displacement of steering wheel, etc.), User Interface (UI) settings (e.g. colors and symbols used to display information on dashboard or other in-vehicle display, types of information displayed, location of where information is displayed, etc.), connectivity settings (e.g. WiFi, Bluetooth^{™} etc.) and any other vehicle setting that a user may modify to change the environment within the car.

In an embodiment, when a condition triggers for modifying which set of vehicle settings apply, the new settings are automatically applied. In an embodiment, when a condition triggers for modifying which set of vehicle settings apply, the associated occupant is prompted to confirm whether they wish to apply the new settings or keep their current settings. Embodiments of conditions which modify which sets of vehicle settings apply include, but are not limited to: conditions internal to the vehicle such as where an occupant is sitting in the vehicle (e.g. driver, front seat passenger, middle or back row, middle seat, window seat, multiple seats), the number and/or identity of other occupants within the vehicle, and/or conditions external to the vehicle such as environmental conditions (e.g. temperature outside the vehicle, time of day, time of year), or other condition(s)/factors(s) that may influence how a vehicle occupant may want to adjust their environment within the vehicle. Accordingly, an occupant/user can create or modify personalized sets of vehicle settings with their user profile or account, which can be automatically (or manually) applied when an associated conditional modifier is triggered.

FIG. 7 is a top view of an open interior of a vehicle 710 equipped with an embodiment of a system and method for applying vehicle settings in accordance with the present disclosure. The vehicle 710 includes the same seats 351, 352, 353, 354, 355, 356, and 357, as the vehicles 310, 410, 510, and 610 depicted in FIGS. 3A-3B, 4, 5, and 6, respectively; and includes the same vents 681-688 depicted in FIG. 6. The vehicle 710 is further illustrated as having a plurality of zones 791, 792, 793, 794, 795, and 796, depicted as rectangular dashed lines which generally form a perimeter around a seat or general area within the vehicle 710. Each zone may be associated with one or more aspects of vehicle settings within the vehicle that are located within the particular zone. For example, a first zone 791 is associated with the first seat 351 and first vent 681, a second zone 792 is associated with the second seat 352 and the second vent 682, and so forth. Some vehicle features may also be associated with more than one zone. For example, the fifth vent 685 may be associated with either the fourth zone 794 or the fifth zone 795. Similarly, the sixth vent 686 may be associated with either the third zone 793 or the fifth zone 795.

Zones may provide additional control over how sets of vehicle settings apply. For example, an occupant sitting in the fourth seat 354 may be limited to only applying their personalized set of vehicle settings to controls and features within the associated fourth zone 794. In an embodiment, a set of vehicle settings may apply to more than one zone. For example, an occupant sitting in the fourth seat 354 may apply their personalized set of vehicle settings to controls and features in other zones if certain criteria are met, such as whether or not an occupant is sitting in the other zone. For example, an occupant sitting in the fourth seat 354 may apply their personalized set of vehicle settings to controls and features in their own associated zone 794, and in the third zone 793, on condition that no occupants are sitting in the third seat 353. Similarly, a driver sitting in the first seat 351 may apply their personalized set of vehicle settings to the first zone 791, and potentially to all other zones within the vehicle depending on vehicle occupancy. In an embodiment, a first user can apply their settings to a zone associated with a second user upon authorization from the second user. In an embodiment, a driver or authorized user may create, modify, or apply sets of vehicle settings for all zones in a vehicle without needing authorization from other occupants. In an embodiment, one or more sensors are used to detect the presence of an occupant in a particular zone. In an embodiment the sensors may include a camera, a pressure sensor, a seat sensor, a heat sensor, a proximity sensor, and other sensors known in the art for localizing and otherwise identifying the location of an occupant within a vehicle.

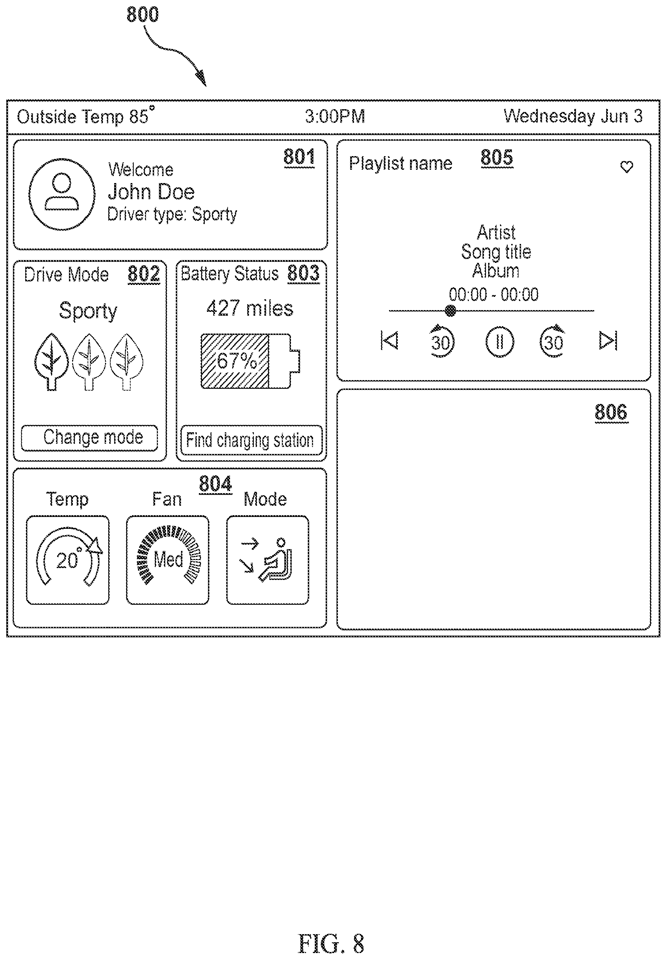

FIG. 8 is a diagram of a User Interface (UI) 800 in accordance with an embodiment of the present disclosure. The UI 800 displays temperature, time, and date and includes a plurality of UI panels 801, 802, 803, 804, 805, and 806 which provide interactive information relating to a user profile, associated vehicle settings, and other vehicle performance indicators. In particular, a first panel 801 includes profile or user information for the associated occupant; a second panel 802 provides an indication of a driving mode associated with the occupant and the vehicle; a third panel 803 provides an indication of vehicle fuel status; a fourth panel 804 provides an indication of a set of vehicle settings associated with the occupant for one or more vents, namely settings for temperature, fan speed, and air flow direction; a fifth panel 805 provides an indication of the audio system including the current playlist, artist, song title, and album; and a sixth panel 806 may be customizable per the direction of the associated occupant. An occupant may configure the UI panel 806 to display particular information, at a particular location within the panel, including adjusting various aspects of the information displayed in the panel, such as size, color, tint, and the types of associated symbols used to display the information. Those skilled in the art will appreciate however, that FIG. 7 is but one realization of an interactive UI display for a user profile or account having associated sets of vehicle settings, and that virtually infinite design variations are possible without departing from the scope of the disclosure herein.

The UI 800 may be provided on a display associated with a vehicle such as on an interactive dashboard console or other display, such as a touch screen display located in the vehicle. The UI 800 may also be deployed as part of a software application running on a smartphone, smartwatch, tablet, laptop, or other electronic device that can communicate remotely with the vehicle. In an embodiment, the UI display includes a plurality of UI display panels, each of which is customizable. In an embodiment, an occupant can create a new user profile or account, including creating associated sets of vehicle settings. In an embodiment, a user can remotely access their user profile or account from an electronic device to create or modify their associated sets of vehicle settings. In an embodiment, a user can remotely create a new user profile or account from an electronic device, and subsequently create or modify associated sets of vehicle settings.

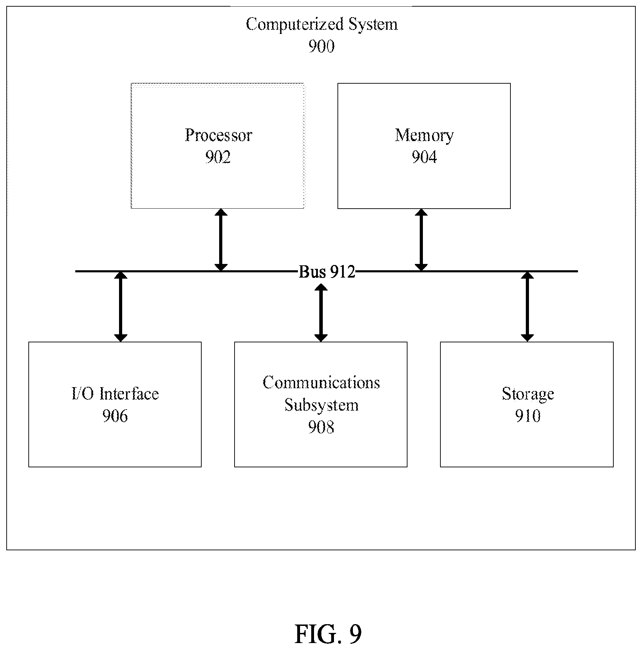

FIG. 9 is a block diagram of an example computerized device or system 900 that may be used in implementing one or more aspects or components of an embodiment of an system and method for applying vehicle settings in accordance with the present disclosure, such as may be implemented for example at least on any one of vehicles 310, 410, 510, 610, and 710.

Computerized system 900 may include one or more of a processor 902, memory 904, a mass storage device 910, an input/output (I/O) interface 906, and a communications subsystem 908. Further, system 900 may comprise multiples, for example multiple processors 902, and/or multiple memories 904, etc. Processor 902 may comprise one or more of a digital processor, an analog processor, a digital circuit designed to process information, an analog circuit designed to process information, a state machine, and/or other mechanisms for electronically processing information. These processing units may be physically located within the same device, or the processor 902 may represent processing functionality of a plurality of devices operating in coordination. The processor 902 may be configured to execute modules by software; hardware; firmware; some combination of software, hardware, and/or firmware; and/or other mechanisms for configuring processing capabilities on the processor 902, or to otherwise perform the functionality attributed to the module and may include one or more physical processors during execution of processor readable instructions, the processor readable instructions, circuitry, hardware, storage media, or any other components.

One or more of the components or subsystems of computerized system 900 may be interconnected by way of one or more buses 912 or in any other suitable manner.

The bus 912 may be one or more of any type of several bus architectures including a memory bus, storage bus, memory controller bus, peripheral bus, or the like. The CPU 902 may comprise any type of electronic data processor. The memory 904 may comprise any type of system memory such as dynamic random access memory (DRAM), static random access memory (SRAM), synchronous DRAM (SDRAM), read-only memory (ROM), a combination thereof, or the like. In an embodiment, the memory may include ROM for use at boot-up, and DRAM for program and data storage for use while executing programs.

The mass storage device 910 may comprise any type of storage device configured to store data, programs, and other information and to make the data, programs, and other information accessible via the bus 912. The mass storage device 910 may comprise one or more of a solid state drive, hard disk drive, a magnetic disk drive, an optical disk drive, or the like. In some embodiments, data, programs, or other information may be stored remotely, for example in the cloud. Computerized system 900 may send or receive information to the remote storage in any suitable way, including via communications subsystem 908 over a network or other data communication medium.

The I/O interface 906 may provide interfaces for enabling wired and/or wireless communications between computerized system 900 and one or more other devices or systems. For instance, I/O interface 906 may be used to communicatively couple with sensors, such as cameras or video cameras. Furthermore, additional or fewer interfaces may be utilized. For example, one or more serial interfaces such as Universal Serial Bus (USB) (not shown) may be provided.

Computerized system 900 may be used to configure, operate, control, monitor, sense, and/or adjust devices, systems, and/or methods according to the present disclosure.

A communications subsystem 908 may be provided for one or both of transmitting and receiving signals over any form or medium of digital data communication, including a communication network. Examples of communication networks include a local area network (LAN), a wide area network (WAN), an inter-network such as the Internet, and peer-to-peer networks such as ad hoc peer-to-peer networks. Communications subsystem 908 may include any component or collection of components for enabling communications over one or more wired and wireless interfaces. These interfaces may include but are not limited to USB, Ethernet (e.g. IEEE 802.3), high-definition multimedia interface (HDMI), Firewire^{™} (e.g. IEEE 1394), Thunderbolt^{™}, WiFi^{™} (e.g. IEEE 802.11), WiMAX (e.g. IEEE 802.16), Bluetooth^{™}, or Near-field communications (NFC), as well as GPRS, UMTS, LTE, LTE-A, and dedicated short range communication (DSRC). Communication subsystem 908 may include one or more ports or other components (not shown) for one or more wired connections. Additionally or alternatively, communication subsystem 908 may include one or more transmitters, receivers, and/or antenna elements (none of which are shown).

Computerized system 900 of FIG. 9 is merely an example and is not meant to be limiting. Various embodiments may utilize some or all of the components shown or described. Some embodiments may use other components not shown or described but known to persons skilled in the art.

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A computer-implemented method (100) for applying vehicle settings, the method (100) comprising:
identifying (110) a vehicle occupant having a personalized set of vehicle settings for a vehicle (310);
identifying (160) a condition modifier associated with the vehicle occupant and the personalized set of vehicle settings, wherein the condition modifier comprises a first condition modifier and a second condition modifier, the first condition modifier being associated with a seated location of the vehicle occupant, and the second condition modifier being associated with a vehicle condition, and
applying (180) a vehicle setting from the set of vehicle settings based on the condition modifier, wherein applying the vehicle setting further comprises:
requesting confirmation from the vehicle occupant to apply the vehicle setting, and
selectively applying the vehicle setting based on the confirmation provided by the vehicle occupant.

2. The computer-implemented method (100) of claim 1 , wherein the vehicle condition is a cabin temperature of the vehicle.

3. The computer-implemented method (100) of claim 1 or 2, wherein applying the vehicle setting comprises applying the vehicle setting to a first zone (791) within the vehicle (310), the first zone (791) being associated with the seated location of the vehicle occupant.

4. The computer-implemented method (100) of claim 1 or 2, wherein applying the vehicle setting comprises applying the vehicle setting to a plurality of zones with the vehicle (310), wherein at least one zone of the plurality of zones does not include the seated location of the vehicle occupant.

5. The computer-implemented method (100) of any one of claims 1 to 4, wherein identifying the vehicle occupant comprises:
capturing a facial image of the vehicle occupant;
retrieving a verified facial image of the vehicle occupant, and
comparing, using a facial recognition algorithm, the captured facial image of the vehicle occupant with the verified facial image of the vehicle occupant.

6. The computer-implemented method (100) of any one of claims 1 to 5, wherein identifying the vehicle occupant comprises identifying an electronic device associated with the vehicle occupant.

7. The computer-implemented method (100) of any one of claims 1 to 5, wherein identifying the vehicle occupant comprises:
prompting the vehicle occupant to provide an authentication credential;
retrieving a verified authentication credential of the vehicle occupant, and comparing the provided authentication credential with the verified authentication credential.

8. The computer-implemented method (100) of any one of claims 1 to 7, wherein the condition modifier further comprises a third condition modifier, the third condition modifier being associated with a seated location of another vehicle occupant.

9. The computer-implemented method (100) of claim 8, wherein applying the vehicle setting comprises:
identifying a first zone (791) within the vehicle associated with a seated location of the vehicle occupant;
identifying a second zone (792) within the vehicle associated with a seated location of the another vehicle occupant;
applying the vehicle setting to the first zone (791), and
preventing the vehicle setting from applying to the second zone (792).

10. A system (900) comprising:
a processor (902); and
a memory (904) storing processor (902) executable instructions that, when executed by the processor (902), cause the processor (902) to perform the method (100) according to any one of claims 1 to 9.

11. A non-transitory computer-readable medium having instructions stored thereon that, when executed by a computing device, cause the computing device to perform the method (100) according to any one of claims 1 to 9.

## Patentansprüche

1. Computerimplementiertes Verfahren (100) zum Anwenden von Fahrzeugeinstellungen, wobei das Verfahren (100) Folgendes aufweist:
Identifizieren (110) eines Fahrzeuginsassen mit einem personalisierten Satz von Fahrzeugeinstellungen für ein Fahrzeug (310);
Identifizieren (160) eines Zustandsmodifikators, der mit dem Fahrzeuginsassen und dem personalisierten Satz von Fahrzeugeinstellungen verknüpft ist, wobei der Zustandsmodifikator einen ersten Zustandsmodifikator und einen zweiten Zustandsmodifikator aufweist, wobei der erste Zustandsmodifikator mit einem Sitzort des Fahrzeuginsassen verknüpft ist und der zweite Zustandsmodifikator mit einem Fahrzeugzustand verknüpft ist, und
Anwenden (180) einer Fahrzeugeinstellung aus dem Satz von Fahrzeugeinstellungen auf der Grundlage von dem Zustandsmodifikator, wobei das Anwenden der Fahrzeugeinstellung ferner Folgendes aufweist:
Anfordern einer Bestätigung von dem Fahrzeuginsassen, die Fahrzeugeinstellung anzuwenden, und
selektives Anwenden der Fahrzeugeinstellung auf der Grundlage der von dem Fahrzeuginsassen bereitgestellten Bestätigung.

2. Computerimplementiertes Verfahren (100) nach Anspruch 1, wobei der Fahrzeugzustand eine Kabinentemperatur des Fahrzeugs ist.

3. Computerimplementiertes Verfahren (100) nach Anspruch 1 oder 2, wobei das Anwenden der Fahrzeugeinstellung das Anwenden der Fahrzeugeinstellung auf eine erste Zone (791) innerhalb des Fahrzeugs (310) aufweist, wobei die erste Zone (791) mit dem Sitzort des Fahrzeuginsassen verknüpft ist.

4. Computerimplementiertes Verfahren (100) nach Anspruch 1 oder 2, wobei das Anwenden der Fahrzeugeinstellung das Anwenden der Fahrzeugeinstellung auf eine Vielzahl von Zonen mit dem Fahrzeug (310) aufweist, wobei wenigstens eine Zone der Vielzahl von Zonen nicht den Sitzort des Fahrzeuginsassen beinhaltet.

5. Computerimplementiertes Verfahren (100) nach einem der Ansprüche 1 bis 4, wobei das Identifizieren des Fahrzeuginsassen Folgendes aufweist:
Erfassen eines Gesichtsbildes des Fahrzeuginsassen;
Abrufen eines verifizierten Gesichtsbildes des Fahrzeuginsassen, und
Vergleichen, unter Verwendung eines Gesichtserkennungsalgorithmus, des erfassten Gesichtsbildes des Fahrzeuginsassen mit dem verifizierten Gesichtsbild des Fahrzeuginsassen.

6. Computerimplementiertes Verfahren (100) nach einem der Ansprüche 1 bis 5, wobei das Identifizieren des Fahrzeuginsassen das Identifizieren einer elektronischen Vorrichtung aufweist, die mit dem Fahrzeuginsassen verknüpft ist.

7. Computerimplementiertes Verfahren (100) nach einem der Ansprüche 1 bis 5, wobei das Identifizieren des Fahrzeuginsassen Folgendes aufweist:
Auffordern des Fahrzeuginsassen, einen Authentifizierungsberechtigungsnachweis bereitzustellen;
Abrufen eines verifizierten Authentifizierungsberechtigungsnachweises des Fahrzeuginsassen, und
Vergleichen des bereitgestellten Authentifizierungsberechtigungsnachweises mit dem verifizierten Authentifizierungsberechtigungsnachweis.

8. Computerimplementiertes Verfahren (100) nach einem der Ansprüche 1 bis 7, wobei der Zustandsmodifikator ferner einen dritten Zustandsmodifikator aufweist, wobei der dritte Zustandsmodifikator mit einem Sitzort eines anderen Fahrzeuginsassen verknüpft ist.

9. Computerimplementiertes Verfahren (100) nach Anspruch 8, wobei das Anwenden der Fahrzeugeinstellung Folgendes aufweist:
Identifizieren einer ersten Zone (791) innerhalb des Fahrzeugs, die mit einem Sitzort des Fahrzeuginsassen verknüpft ist;
Identifizieren einer zweiten Zone (792) innerhalb des Fahrzeugs, die mit einem Sitzort des anderen Fahrzeuginsassen verknüpft ist;
Anwenden der Fahrzeugeinstellung auf die erste Zone (791), und
Verhindern, dass die Fahrzeugeinstellung auf die zweite Zone (792) angewendet wird.

10. System (900) mit:
einem Prozessor (902); und
einem Speicher (904), der von einem Prozessors (902) ausführbare Anweisungen speichert, die bei Ausführung durch den Prozessor (902) den Prozessor (902) veranlassen, das Verfahren (100) nach einem der Ansprüche 1 bis 9 durchzuführen.

11. Nichtflüchtiges von einem Computer lesbares Medium mit darauf gespeicherten Anweisungen, die bei Ausführung durch eine Rechenvorrichtung die Rechenvorrichtung veranlassen, das Verfahren (100) nach einem der Ansprüche 1 bis 9 durchzuführen.

## Revendications

1. Procédé mis en œuvre par ordinateur (100) pour appliquer des réglages de véhicule, le procédé (100) comprenant :
l'identification (110) d'un occupant de véhicule ayant un ensemble personnalisé de réglages de véhicule pour un véhicule (310) ;
l'identification (160) d'un modificateur d'état associé à l'occupant de véhicule et à l'ensemble personnalisé de réglages de véhicule, dans lequel le modificateur d'état comprend un premier modificateur d'état et un deuxième modificateur d'état, le premier modificateur d'état étant associé à un emplacement d'assise de l'occupant de véhicule, et le deuxième modificateur d'état étant associé à un état de véhicule, et
l'application (180) d'un réglage de véhicule à partir de l'ensemble de réglages de véhicule sur la base du modificateur d'état, dans lequel l'application du réglage de véhicule comprend en outre :
la demande d'une confirmation de l'occupant de véhicule pour appliquer le réglage de véhicule, et
l'application sélective du réglage de véhicule sur la base de la confirmation fournie par l'occupant de véhicule.

2. Procédé mis en œuvre par ordinateur (100) selon la revendication 1, dans lequel l'état de véhicule est une température de cabine du véhicule.

3. Procédé mis en œuvre par ordinateur (100) selon la revendication 1 ou 2, dans lequel l'application du réglage de véhicule comprend l'application du réglage de véhicule à une première zone (791) à l'intérieur du véhicule (310), la première zone (791) étant associée à l'emplacement d'assise de l'occupant de véhicule.

4. Procédé mis en œuvre par ordinateur (100) selon la revendication 1 ou 2, dans lequel l'application du réglage de véhicule comprend l'application du réglage de véhicule à une pluralité de zones avec le véhicule (310), dans lequel au moins une zone de la pluralité de zones n'inclut pas l'emplacement d'assise de l'occupant de véhicule.

5. Procédé mis en œuvre par ordinateur (100) selon l'une quelconque des revendications 1 à 4, dans lequel l'identification de l'occupant de véhicule comprend :
la capture d'une image faciale de l'occupant de véhicule ;
la récupération d'une image faciale vérifiée de l'occupant de véhicule, et
la comparaison, à l'aide d'un algorithme de reconnaissance faciale, de l'image faciale capturée de l'occupant de véhicule avec l'image faciale vérifiée de l'occupant de véhicule.

6. Procédé mis en œuvre par ordinateur (100) selon l'une quelconque des revendications 1 à 5, dans lequel l'identification de l'occupant de véhicule comprend l'identification d'un dispositif électronique associé à l'occupant de véhicule.

7. Procédé mis en œuvre par ordinateur (100) selon l'une quelconque des revendications 1 à 5, dans lequel l'identification de l'occupant de véhicule comprend :
l'invitation de l'occupant de véhicule à fournir un justificatif d'authentification ;
la récupération d'un justificatif d'authentification vérifié de l'occupant de véhicule, et
la comparaison du justificatif d'authentification fourni avec le justificatif d'authentification vérifié.

8. Procédé mis en œuvre par ordinateur (100) selon l'une quelconque des revendications 1 à 7, dans lequel le modificateur d'état comprend en outre un troisième modificateur d'état, le troisième modificateur d'état étant associé à un emplacement d'assise d'un autre occupant de véhicule.

9. Procédé mis en œuvre par ordinateur (100) selon la revendication 8, dans lequel l'application du réglage de véhicule comprend :
l'identification d'une première zone (791) à l'intérieur du véhicule associée à un emplacement d'assise de l'occupant de véhicule ;
l'identification d'une deuxième zone (792) à l'intérieur du véhicule associée à un emplacement d'assise de l'autre occupant de véhicule ;
l'application du réglage de véhicule à la première zone (791), et
l'empêchement du réglage de véhicule de s'appliquer à la deuxième zone (792).

10. Système (900) comprenant :
un processeur (902) ; et
une mémoire (904) stockant des instructions exécutables par le processeur (902) qui, lorsqu'elles sont exécutées par le processeur (902), amènent le processeur (902) à effectuer le procédé (100) selon l'une quelconque des revendications 1 à 9.

11. Support non transitoire lisible par ordinateur sur lequel sont stockées des instructions qui, lorsqu'elles sont exécutées par un dispositif informatique, amènent le dispositif informatique à effectuer le procédé (100) selon l'une quelconque des revendications 1 à 9.
